(19) Europäisches Patentamt
European Patent Office
Office européen des brevets

(11) EP 0 902 068 B1

(12) EUROPÄISCHE PATENTSCHRIFT

(45) Veröffentlichungstag und Bekanntmachung des Hinweises auf die Patenterteilung:
**13.06.2001 Patentblatt 2001/24**

(51) Int Cl.[7]: **C09D 183/08**, C08G 77/388, C08G 77/392, C09K 11/06

(21) Anmeldenummer: **98114361.3**

(22) Anmeldetag: **30.07.1998**

(54) **Fluoreszierende Gruppen aufweisende Organosiliciumverbindungen, deren Herstellung und Verwendung**

Organosilicon compounds having fluorescent groups, their preparation and use

Composés organosilicium ayant des groupes fluorescents, leur préparation et usage

(84) Benannte Vertragsstaaten:
**DE FR GB**

(30) Priorität: **11.09.1997 DE 19739963**

(43) Veröffentlichungstag der Anmeldung:
**17.03.1999 Patentblatt 1999/11**

(73) Patentinhaber: **Wacker-Chemie GmbH**
**81737 München (DE)**

(72) Erfinder:
- **Dauth, Jochen, Dr.**
  **84489 Burghausen (DE)**
- **Deubzer, Bernward, Dr.**
  **84489 Burghausen (DE)**
- **Wolferseder, Josef**
  **84367 Tann (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 716 114** **EP-A- 0 719 835**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 902 068 B1

Printed by Jouve, 75001 PARIS (FR)

## Beschreibung

Die Erfindung betrifft fluoreszierende Gruppen aufweisende Organosiliciumverbindungen, deren Herstellung und Verwendung.

Organosiliciumverbindungen mit kovalent gebundenen fluoreszierenden Gruppen sind in der Literatur vielfältig bekannt.

Härtbare Organopolysiloxane mit chromophoren Gruppen, die auch fluoreszierende Eigenschaften aufweisen können, sind in US-A 3,741,932 (Minnesota Mining and Manufacturing Company, ausgegeben am 26. Juni 1973) beschrieben. Die Synthese erfolgt durch die Ringöffnungsreaktion von Epoxyfunktionen mit sulfonamidfunktionellen Chromphoren.

Fluoreszierende Organopolysiloxane für die Behandlung von Haaren sind in US-A 5,176,906 (Dow Corning Corporation, 5. Januar 1993) offenbart. Hier erfolgt die Darstellung der in Anspruch genommenen Verbindungen über eine nukleophile Substitutionsreaktion von aminfunktionellen Polysiloxanen mit Sulfonylchloridgruppen aufweisenden Fluoreszenzverbindungen.

Strahlenhärtbare Epoxysilicon-Polyether-Blockcopolymere werden in US-A 5,227,410 (General Electric Company, 13. Juli 1993) beschrieben. Bedingt durch die polare Struktur der Blockcopolymeren lassen sich Sensibilisatoren im 200 ppm-Bereich klar, einarbeiten.

Thermisch über eine Hydrosilylierungsreaktion härtbare Organopolysiloxane mit Dansylgruppen werden in EP-A 455 384 (Dow Corning Corporation, offengelegt am 6. November 1991) beschrieben. Die Organopolysiloxane mit Vinyl- und Aminfunktionen werden z.B. mit Dansylchlorid modifiziert und können dann mit H-Vernetzern ausgehärtet werden.

Fluorengruppenhaltige Organopolysiloxane für Beschichtungen werden in US-A 4,978,731 (Minnesota Mining and Manufacturing Company, ausgegeben am 18. Dezember 1990) offenbart. Die Darstellung erfolgt über eine Hydrosilylierungsreaktion von Allylfluoren an wasserstoffhaltige Organopolysiloxane. Die markierten Polysiloxane dienen der Bestimmung von Auftragsgewicht und Beschichtungsfehlern.

Eine Methode, um die Härtungsperformance von Siliconen zu prüfen, wird in EP-A 720 015 (Avery Dennison Corporation, offengelegt am 3. Juli 1996) beschrieben. Die mit Pyrengruppen funktionalisierten Polysiloxane gewährleisten eine on-line-Kontrolle der Härtung.

Silane mit fluoreszierenden Gruppen und Folgereaktionen mit Polyorganosiloxanen als chemischer Indikator in biologischen Sensoren sind in US-A 4,746,751 (Baxter Travenol Laboratories, ausgegeben am 24. Mai 1988) offenbart. Die Synthese basiert auf einer Umsetzung von Grignardverbindungen mit Chlorsilanen.

Weitere Organosiliciumverbindungen mit fluoreszierenden Gruppen, im speziellen mit Pyrenverbindungen, sind in US-A 4,866,152 (Dow Corning Corporation, ausgegeben am 12. September 1989) offenbart. Durch Wasserabspaltung aus Pyrenaldehyd und aminofunktionellen Polysiloxanen kann eine kovalente Bindung des fluoreszierenden Agens am Polysiloxan erreicht werden.

Siliconharze mit fluoreszierenden Eigenschaften werden in US-A 3,427,273 (Owens-Illinois Glass Company, ausgegeben am 11. Februar 1969) beschrieben. Die Darstellung erfolgt über die Lithiierung von Bromnaphthalin und weitere Umsetzung mit Alkoxysilanen.

EP-A 719 835 offenbart eine additionsvernetzbare, fluoreszierende Organopolysiloxanzusammensetzung, die für Trennbeschichtungen geeignet ist. Die Einführung der fluoreszierenden Gruppe am Organopolysiloxan erfolgt durch Umsetzung von Pyrenaldehyd und aminofunktionellem Organopolysiloxan unter Wasserabspaltung.

Es bestand die Aufgabe, Organosiliciumverbindungen mit fluoreszierenden Gruppen bereitzustellen, die in einem einfachen Verfahren unter Verwendung gut zugänglicher Ausgangsstoffe und ohne Einsatz von Übergangsmetallkatalysatoren hergestellt werden und die mittels einer radikalischen Polymerisation gehärtet werden können. Weiterhin bestand die Aufgabe,

Organosiliciumverbindungen mit fluoreszierenden Gruppen bereitzustellen, die zur Herstellung von Beschichtungen verwendet werden können, wobei die markierten Organosiliciumverbindungen zur Bestimmung von Auftragsgewicht und zur Erkennung von Beschichtungsfehlern dienen. Die Aufgabe wird durch die Erfindung gelöst.

Gegenstand der Erfindung sind fluoreszierende Gruppen aufweisende Organosiliciumverbindungen mit Einheiten der Formeln

$$A_dE_aR_bSiX_cO_{\frac{4-(a+b+c+d)}{2}} \qquad (I),$$

wobei R gleich oder verschieden ist, einen einwertigen, gegebenenfalls substituierten Kohlenwasserstoffrest mit 1 bis 18 Kohlenstoffatom(en) je Rest, der durch ein oder mehrere Sauerstoffatome unterbrochen sein kann, bedeutet,

X gleich oder verschieden ist, ein Chloratom oder ein Rest der Formel $OR^1$ ist, wobei $R^1$ ein Wasserstoffatom oder einen Alkylrest mit 1 bis 8 Kohlenstoffatom(en) je Rest, der durch ein Ethersauerstoffatom substituiert sein kann,
E einen ein oder mehrere (Meth)acrylatgruppen aufweisenden organischen Rest bedeutet,
A ein Rest der Formel

$$-R^2[-NR^3]_x\text{-L oder }-R^2[\text{-S-L}]_x \qquad (II)$$

ist, wobei $R^2$ einen zwei- oder dreiwertigen, gegebenenfalls substituierten Kohlenwasserstoffrest mit 2 bis 50 Kohlenstoffatomen je Rest bedeutet, der durch eine oder mehrere Gruppen der Formeln

$$-\overset{\overset{O}{\|}}{C}-O-\ ,\ -\overset{\overset{O}{\|}}{C}-NR^3-,\ -O-$$

substituiert ist,
x entsprechend der Wertigkeit von Rest $R^2$ 1 oder 2, bevorzugt 2 ist,
$R^3$ die Bedeutung von $R^1$ hat oder einen Rest der Formel $-C(=O)-R^1$ bedeutet und
L einen fluoreszierenden, organischen Rest bedeutet,
a 0, 1 oder 2,
b 0, 1, 2 oder 3,
c 0, 1, 2 oder 3,
d 0, 1 oder 2

und die Summe $a+b+c+d \leq 4$, bevorzugt die Summe $a+b+c+d \leq 3$ ist, mit der Maßgabe, daß je Molekül mindestens ein Rest A enthalten ist.

Gegenstand der Erfindung ist weiterhin ein Verfahren zur Herstellung von Organosiliciumverbindungen mit fluoreszierenden Gruppen, dadurch gekennzeichnet, daß Organosiliciumverbindungen (1) mit Einheiten der Formel

$$E_aR_bSix_cO_{\frac{4-(a+b+c)}{2}} \qquad (III),$$

wobei R, X, E, a, b und c die oben dafür angegebene Bedeutung haben,
mit der Maßgabe, daß pro Molekül mindestens ein Rest E enthalten ist,
mit fluoreszierenden, organischen Verbindungen (2) der Formeln

$$HNR^3\text{-L oder HS-L} \qquad (IV),$$

wobei $R^3$ und L die oben dafür angegebene Bedeutung haben, umgesetzt werden.

Die erfindungsgemäße Umsetzung kann dabei in Substanz, Lösung oder Emulsion durchgeführt werden.

Die erfindungsgemäßen Organosiliciumverbindungen sind vorzugsweise Silane oder Organopolysiloxane, wobei Organopolysiloxane bevorzugt sind.

Die erfindungsgemäßen Organosiliciumverbindungen besitzen vorzugsweise ein durchschnittliches Molekulargewicht ($M_n$) von 500 bis 1 000 000 g/mol, bevorzugt 5 000 bis 1 500 000 g/mol und vorzugsweise eine Viskosität von 10 bis 1 000 000 $mm^2.s^{-1}$ bei 25°C, bevorzugt 20 bis 100 000 $mm^2.s^{-1}$ bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Antrhryl- und Phenanthrylrest, Alkarylreste, wie o-, m-, p-Tolylreste; Xylylreste und Ethylphenylreste; und Aralkylreste, wie der Benzylrest und der Phenylethylrest.
Bevorzugt sind der Methylrest, der n-Octylrest, der n-Dodecylrest und der n-Octadecylrest.

Beispiele für halogenisierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Alkylreste $R^1$ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Bevorzugt ist $R^3$ ein Wasserstoffatom.

Vorzugsweise ist E ein Rest der Formel

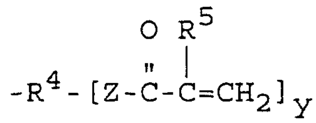 (V),

wobei

$R^4$ ein zwei- oder dreiwertiger Kohlenwasserstoffrest mit 1 bis 50 Kohlenstoffatom(en) bedeutet, der durch ein oder mehrere Sauerstoffatome unterbrochen sein kann,
Z ein Rest der Formel -O- oder $-NR^3-$, insbesondere -O- bedeutet, wobei $R^3$ die oben dafür angegebene Bedeutung hat,
$R^5$ ein Wasserstoffatom oder eine Methylgruppe ist und
y 1 oder 2, insbesondere 2 ist.

Bevorzugt ist E ein Rest der Formel

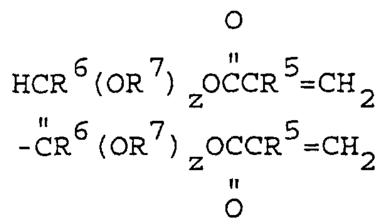

wobei

$R^5$ die oben dafür angegebene Bedeutung hat,
$R^6$ einen linearen oder verzweigten Alkylenrest mit 1 bis 6 Kohlenstoffatom(en) je Rest,
$R^7$ einen linearen oder verzweigten Alkylenrest mit 1 bis 6 Kohlenstoffatom(en) je Rest und
z 0 oder eine ganze Zahl im Wert von 1 bis 40 bedeutet,

Vorzugsweise ist $R^2$ ein Rest der Formel

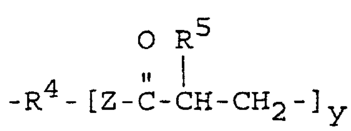 (VI),

wobei $R^4$, $R^5$, Z und y die oben dafür angegebene Bedeutung haben.

Bevorzugt ist $R^2$ ein Rest der Formel

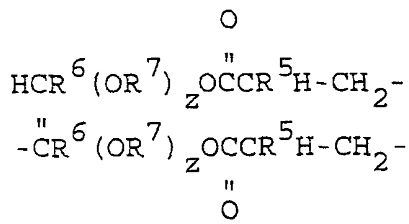

wobei $R^5$, $R^6$, $R^7$ und z die oben dafür angegebene Bedeutung haben.

Beispiele für acrylatfunktionelle Reste E sind solche der Formeln:

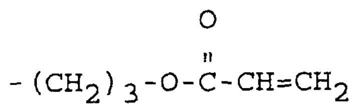

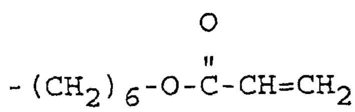

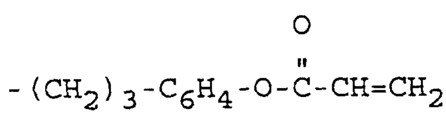

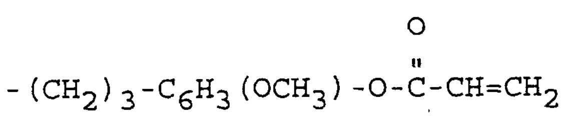

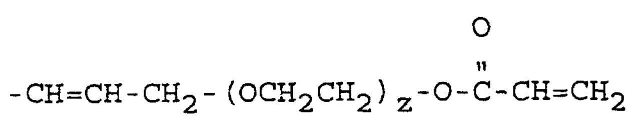

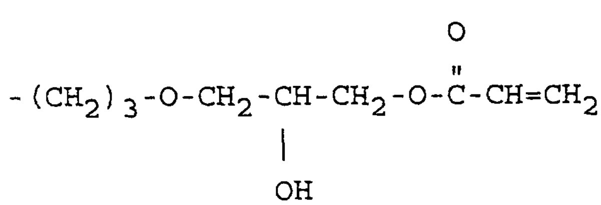

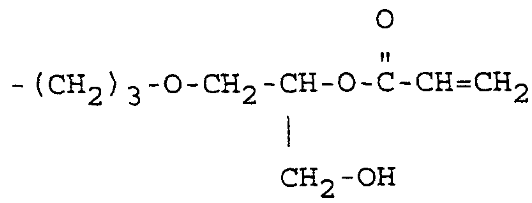

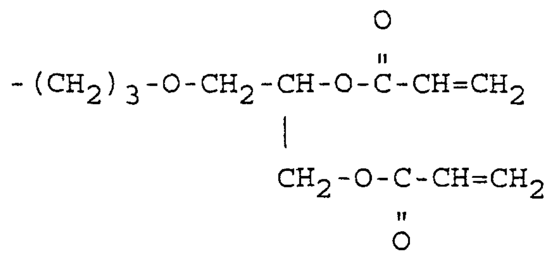

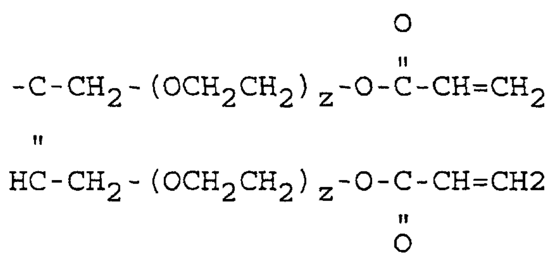

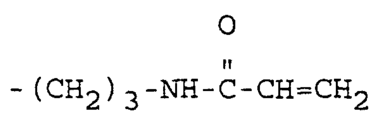

wobei z die oben dafür angegebene Bedeutung hat. Beispiele für Reste A sind solche der Formeln

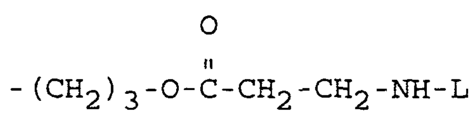

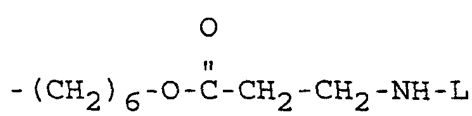

$$-(CH_2)_3-C_6H_4-O-\overset{\overset{O}{\parallel}}{C}-CH_2-CH_2-NH-L$$

$$-(CH_2)_3-C_6H_3(OCH_3)-O-\overset{\overset{O}{\parallel}}{C}-CH_2-CH_2-NH-L$$

$$-CH{=}CH-CH_2-(OCH_2CH_2)_z-O-\overset{\overset{O}{\parallel}}{C}-CH_2-CH_2-NH-L$$

$$-(CH_2)_3-O-CH_2-\underset{\underset{OH}{|}}{CH}-CH_2-O-\overset{\overset{O}{\parallel}}{C}-CH_2-CH_2-NH-L$$

$$-(CH_2)_3-O-CH_2-\underset{\underset{CH_2-OH}{|}}{CH}-O-\overset{\overset{O}{\parallel}}{C}-CH_2-CH_2-NH-L$$

$$-(CH_2)_3-O-CH_2-\underset{\underset{CH_2-O-\underset{\underset{O}{\parallel}}{C}-CH_2-CH_2-NH-L}{|}}{CH}-O-\overset{\overset{O}{\parallel}}{C}-CH_2-CH_2-NH-L$$

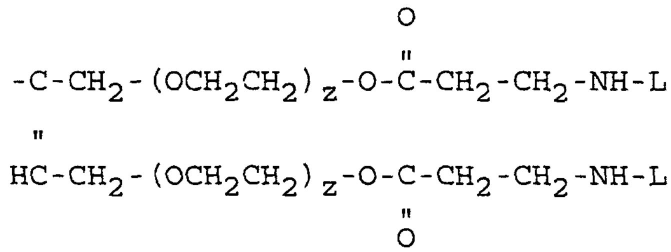

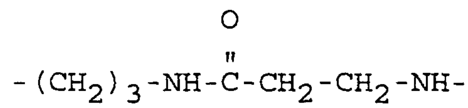
,

wobei z und L die oben dafür angegebene Bedeutung haben.

Ein bevorzugtes Beispiel für den Rest A ist solcher der Formel

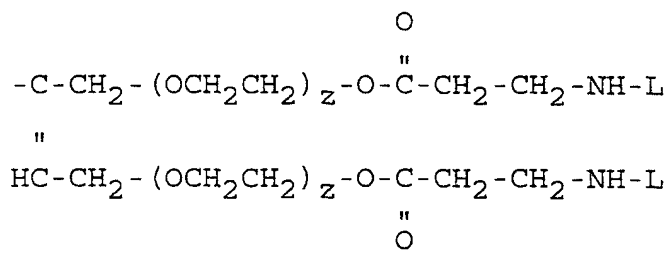
,

wobei z und L die oben dafür angegebene Bedeutung haben.

Vorzugsweise ist L ein fluoreszierender Kohlenwasserstoffrest mit 4 bis 30 Kohlenstoffatomen je Rest, der ein oder mehrere Heteroatome ausgewählt aus der Gruppe von Stickstoff, Sauerstoff, Schwefel und Phosphor enthalten kann.

Beispiele für Reste L sind solche der Formeln

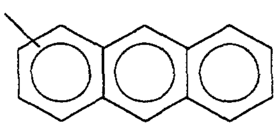
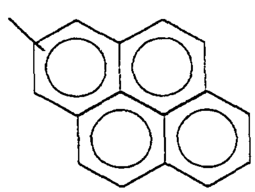
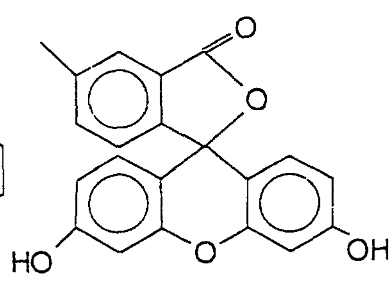

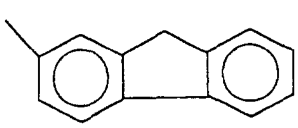
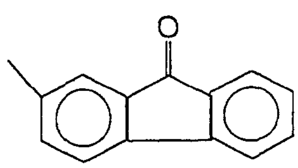
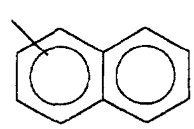

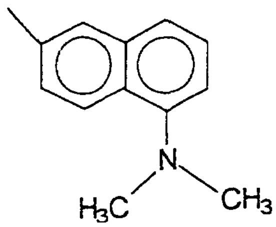

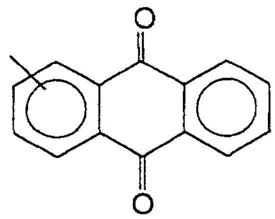

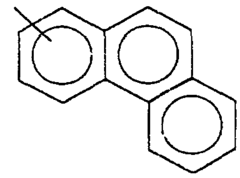

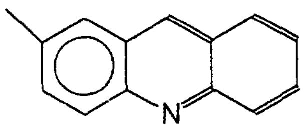

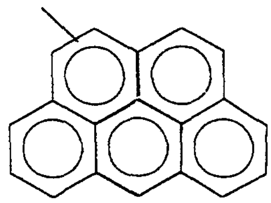

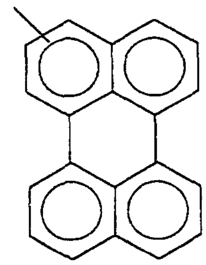

wobei die Anbindung an den Rest $R^2$ über $-NR^3-$ bzw. -S- auf jede chemisch sinnvolle Weise erfolgen kann.

Bevorzugt als fluoreszierende Gruppen aufweisende Organosiliciumverbindungen sind solche der Formel

$$Y_gR_{3-g}SiO(SiR_2O)_o(SiRYO)_mSiR_{3-g}Y_g \qquad (VII),$$

wobei

R die oben dafür angegebene Bedeutung hat,
Y einen Rest A oder E bedeutet,
mit der Maßgabe, daß je Molekül mindestens ein Rest A enthalten ist,
g 0, 1 oder 2,
m 0 oder eine ganze Zahl im Wert von 1 bis 1 000 und
o 0 oder eine ganze Zahl im Wert von 1 bis 1 000 ist.

Vorzugsweise sind die bei dem erfindungsgemäßen Verfahren eingesetzten Organosiliciumverbindungen (1) solche der allgemeinen Formel

$$E_gR_{3-g}SiO(SiR_2O)_o(SiREO)_mSiR_{3-g}E_g \qquad (VIII),$$

wobei R, E, g, o und m die oben dafür angegebene Bedeutung haben,
mit der Maßgabe, daß je Molekül mindestens ein Rest E enthalten ist.

Verfahren zur Herstellung der bei dem erfindungsgemäßen Verfahren eingesetzten Organosiliciumverbindungen (1) sind bekannt und beispielsweise in US-A 5,593,787 (Wacker-Chemie GmbH, ausgegeben am 14. Januar 1997) beschrieben.

Bei dem erfindungsgemäßen Verfahren werden pro Mol des Restes E der eingesetzten Organosiliciumverbindung (1) vorzugsweise 0,0001 bis 2 Mol, bevorzugt 0,001 bis 2 Mol und besonders bevorzugt 0,001 bis 1 Mol fluoreszierende organische Verbindung (2) eingesetzt.

Bei dem erfindungsgemäßen Verfahren können alle bekannte Verbindungen, die Michaelreaktion-ähnliche Reaktionen katalysieren, wie beispielsweise Eisessig, Zinn(IV)chlorid, Natriummethylat und Alkaliamide, eingesetzt werden, was nicht bevorzugt ist.

Des weiteren können bei dem erfindungsgemäßen Verfahren Radikalinitiatoren, wie Azoverbindungen und/ oder Peroxoverbindungen, als Katalysatoren zugesetzt werden, was nicht bevorzugt ist. Falls derartige Katalysatoren

eingesetzt werden, handelt es sich um Mengen von vorzugsweise 0,1 bis 5 Gew.-%, bezogen auf das Gesamtgewicht der Organosiliciumverbindung (1) und der fluoreszierenden organischen Verbindung (2).

Bei dem erfindungsgemäßen Verfahren können Lösungsmittel und Wasser oder Mischungen aus beiden mitverwendet werden. Beispiele für organische Lösungsmittel sind Toluol, Xylol, 2-Butanol, 1-Butanol, n-Butylacetat, Isopropanol und Dimethoxyethan.

Vorzugsweise wird mitverwendetes organisches Lösungsmittel nach der erfindungsgemäßen Umsetzung entfernt.

Das erfindungsgemäße Verfahren wird vorzugsweise beim Druck der umgebenden Atmosphäre, also etwa bei 1 020 hPa (abs.) durchgeführt. Es kann aber auch bei höheren oder niedrigeren Drücken durchgeführt werden. Ferner wird das erfindungsgemäße Verfahren vorzugsweise bei einer Temperatur von 25°C bis 150°C, bevorzugt 25°C bis 120°C, besonders bevorzugt 25°C bis 100 °C, durchgeführt.

Die nach dem erfindungsgemäßen Verfahren erhaltenen fluoreszierende Gruppen aufweisende Organosiliciumverbindungen können mit Organopolysiloxanen (3), ausgewählt aus der Gruppe, bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

Vorzugsweise werden als lineare, endständige Triorganosiloxygruppen aufweisende Organopolysiloxane solche der Formel

$$R_3SiO(SiR_2O)_rSiR_3,$$

wobei

R die oben dafür angegebene Bedeutung hat und
r 0 oder eine ganze Zahl im Wert von 1 bis 1 500 ist,

als lineare, endständige Hydroxylgruppen aufweisende Organopolysiloxane solche der Formel

$$HO(SiR_2O)_sH,$$

wobei

R die oben dafür angegebene Bedeutung hat und
s eine ganze Zahl im Wert von 1 bis 1 500 ist,

als cyclische Organopolysiloxane solche der Formel

$$(R_2SiO)_t$$

wobei

R die oben dafür angegebene Bedeutung hat und
t eine ganze Zahl von 3 bis 12 ist

und als Mischpolymerisate solche als Einheiten der Formel

$$R_2SiO \text{ und } RSiO_{3/2,}$$

wobei R die oben dafür angegebene Bedeutung hat, eingesetzt.

Die Mengenverhältnisse der bei der gegebenenfalls durchgeführten Equilibrierung eingesetzten Organopolysiloxane (3) und fluoreszierende Gruppen aufweisende Organopolysiliciumverbindungen werden lediglich durch den gewünschten Anteil der fluoreszierenden Gruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden saure oder basische Katalysatoren, welche die

Equilibrierung fördern, eingesetzt.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gewichts-ppm (= Teile je Million), insbesondere 50 bis 200 Gewichts-ppm, jeweils bezogen auf das Gesamtgewicht der eingesetzten Organosiliciumverbindungen, verwendet.

Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate. Bevorzugt sind Alkalihydroxide, welche in Mengen von 50 bis 10 000 Gewichts-ppm (Teile je Million), insbesondere 500 bis 2 000 Gewichts-ppm, jeweils bezogen auf das Gesamtgewicht der eingesetzten Organosiliciumverbindungen, verwendet werden.

Die gegebenenfalls durchgeführte Equilibrierung wird vorzugsweise bei 80 bis 150°C und beim Druck der umgebenden Atmosphäre, also etwa bei 1 020 hPa (abs.), durchgeführt. Falls erwünscht, können aber auch höhere oder niedrigere Drücke angewendet werden. Das Equilibrieren wird vorzugsweise in 5 bis 20 Gewichtsprozent, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Wird die fluoreszierende organische Verbindung (2) unterstöchiometrisch auf die (Meth)acrylatgruppen in Organosiliciumverbindung (1) eingesetzt, können die erfindungsgemäßen Organosiliciumverbindungen über die verbleibenden (Meth)acrylatgruppen radikalisch oder über eine Hydrosilylierung vernetzt werden.

Bevorzugt enthalten dann die erfindungsgemäßen fluoreszierende Gruppen und (Meth)acryloxygruppen aufweisenden Organosiliciumverbindungen durchschnittlich mindestens 0,001 Reste A und mindestens 2 Reste E, insbesondere durchschnittlich 0,01 bis 0,1 Reste A und 2 bis 8 Reste E.

Gegenstand der Erfindung sind weiterhin strahlungshärtende Zusammensetzungen enthaltend

(A) fluoreszierende Gruppen und (Meth)acryloxygruppen aufweisende Organopolysiloxane mit Einheiten der Formel (I)
(B) Photosensibilisatoren.

Gegenstand der Erfindung sind weiterhin Formkörper hergestellt durch Vernetzung der erfindungsgemäßen Zusammensetzungen.

Die erfindungsgemäßen strahlungshärtenden Zusammensetzungen werden vorzugsweise zur Herstellung von Beschichtungen, wie Überzügen, verwendet.

Gegenstand der Erfindung ist weiterhin ein Verfahren zur Herstellung von Beschichtungen, dadurch gekennzeichnet, daß die erfindungsgemäße Zusammensetzung auf das Substrat aufgetragen und durch Bestrahlung mit energiereicher Strahlung vernetzen gelassen wird.

Vorzugsweise werden die erfindungsgemäßen fluoreszierende Gruppen und (Meth)acryloxygruppen aufweisenden Organopolysiloxane durch Licht, bevorzugt durch Ultraviolettlicht, vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel-, Quecksilberhochdrucklampen oder Eximerlampen erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxanen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Geeignete Photosensibilisatoren (B) sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphtalinsulfonsäuren, Benzaldehyde und Zimtsäuren.

Beispiele hierfür sind Fluorenon, Fluoren, Carbazol; Acetophenon; substituierte Acetophenone, wie 3-Methylacetophenon, 2,2 -Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-[Methylthio)phenyl]-2-morpholinpropanon-1, Benzophenon; substitierte Benzophenone, wie Michlers Keton, 3-Methoxybenzophenon, 4,4'-Dimethylaminobenzophenon, 4,-Methoxybenzophenon, 4-Chlorbenzophenon, 4,4,-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Antrachino-1,5-disulfonsäuredinatriumsalz; Benzoin; substituierte Benzoine, wie Benzoinmethylether; Benzil; 2-Naphtalinsulfonylchlorid; Benzaldehyd; Zimtsäure. Besonders bevorzugt ist Oligo [2-hydroxy-2-methyl-1-(4 (1-methylvinyl) phenyl) -propanon].

Photosensibilisatoren werden in den erfindungsgemäßen Zusammensetzungen in Mengen von vorzugsweise 0,01 bis 10 Gew.-%, bevorzugt 0,5 bis 5 Gew.-%, jeweils bezogen auf das Gesamtgewicht der zu vernetzenden Organopolysiloxane, eingesetzt.

Die erfindungsgemäßen Zusammensetzungen können Polymerisationsinhibitoren enthalten. Aus Gründen der besseren Handhabung ist es bevorzugt, die erfindungsgemäßen Zusammensetzungen mit geringen Mengen Inhibitoren zu versetzen, um beispielsweise vorzeitige Vernetzung einer verwendungsfähigen Formulierung während deren Lagerung zu verhindern.

Beispiele für gegebenenfalls eingesetzte Inhibitoren sind alle gebräuchlichen, auch bisher in radikalisch ablaufenden Prozessen eingesetzten Inhibitoren, wie Hydrochinon, 4-Methoxyphenol, 2,6-Ditert.butyl-4-methylphenol oder Phenothiazin. Vorzugsweise werden Inhibitoren in Mengen von 10 bis 10 000 ppm, besonders bevorzugt 50 bis 1 000 ppm, jeweils bezogen auf das Gesamtgewicht der zu vernetzenden Organopolysiloxane, eingesetzt.

Gegebenenfalls können zusätzlich monomere oder oligomere, organische (Meth)acrylatester oder deren Gemische in einer Menge von vorzugsweise 0,1 bis 10 Gewichtsprozent, bezogen auf das Gesamtgewicht der zu vernetzenden Organopolysiloxane, zugegeben werden, wobei dies nicht bevorzugt ist.

Beispiele für Substrate, auf welche die erfindungsgemäßen Beschichtungen aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Beschichtungen beispielsweise in der Trennpapierbeschichtung.

Das Auftragen der erfindungsgemäßen strahlungshärtenden Zusammensetzungen auf die zu beschichtenden Substrate kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken; z.B. mittels einer Offset-Gravurüberzugsvorrichtung, Messer- oder Rakelbeschichtung.

Die erfindungsgemäßen, fluoreszierende Gruppen aufweisenden Organosiliciumverbindungen zeichnen sich durch ihre einfache Darstellungsweise und die Möglichkeit der gezielten Abstufung der Lumineszenz aus.

Im Gegensatz zu Hydrosilylierungsreaktionen benötigt man bei der Michaelreaktion-ähnlichen Reaktion kein Übergangsmetall zur Katalyse. Durch die niedrigen Reaktionstemperaturen ist die zusätzliche thermische Belastung der (Meth)acrylatgruppen bei der Umsetzung gering. Die Ausrüstung mit fluoreszierenden Gruppen kann "in situ" während der Synthese der Siliconacrylate erfolgen.

Werden bei dem erfindungsgemäßen Verfahren Verbindungen (2) der Formel $HNR^3$-L verwendet, entstehen nach der Umsetzung sekundäre bzw. tertiäre Amine, die bei der radikalischen Polymerisation als Redoxpartner reagieren und die Sauerstoffempfindlichkeit der radikalischen Polymerisation reduzieren können. Bevorzugt werden die erfindungsgemäßen Organosiliciumverbindungen bei der Strahlungshärtung von Siliconacrylaten eingesetzt, wobei sie nicht inhibierend wirken. Über eine Eichmethode können so die Auftragsgewichte der Beschichtungen mittels Lumineszenzmessungen ermittelt werden.

Fehlerhafte Beschichtungen lassen sich leicht erkennen. Die erfindungsgemäßen, fluoreszierende Gruppen aufweisende Organosiliciumverbindungen können auch als Additiv in thermisch additionsvernetzenden Organopolysiloxanmassen verwendet werden.

Beispiel 1:

35 mg (0,18 mmol) 1-Aminoanthracen werden in 1 g (10,9 mmol) Toluol bei Raumtemperatur gelöst und werden dann versetzt mit 70 g (58 mmol C=C) eines Dimethylpolysiloxans der mittleren Kettenlänge 56 mit endständigen Si-gebundenen Diacrylatgruppen der Formel

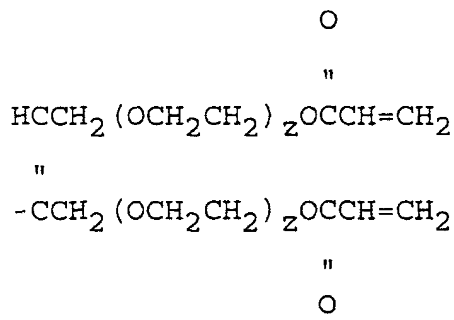

z = 2.7 - 3.0

das ein Doppelbindungsequivalent von ca. 1300 g/mol und eine Viskosität von 270 $mm^2/s$ bei 25°C besitzt. Die Reaktionslösung wird auf 90°C temperiert und eine Stunde lang gerührt. Nach der Filtration wird die Reaktionsmischung im Hochvakuum (1 mbar) bei 90°C bis zur Gewichtskonstanz eingeengt. Es werden 68,3 g (97,6 % d.Th.) eines gelben, klaren Öles mit einer Viskosität von 302 $mm^2/s$ bei 25°C erhalten. Das Öl zeigt eine starke Fluoreszenz im UV-Bereich von 340 - 410 nm (Fluor 1).

Beispiel 2:

Die Arbeitsweise von Beispiel 1 wird wiederholt mit der Abänderung, daß 70 mg (0,36 mmol) anstelle von 35 mg 1-Aminoanthracen eingesetzt werden.
Es werden 67,9 g (97 % d.Th.) eines bräunlichen, klaren Öles mit einer Viskosität von 308 $mm^2/s$ bei 25°C erhalten. Das Öl zeigt eine starke Fluoreszenz im UV-Bereich von 340 - 410 nm.

Beispiel 3:

Die Arbeitsweise von Beispiel 1 wird wiederholt mit der Abänderung, daß 35 mg (0,1 mmol) 4-Aminofluorescein anstelle von 35 mg 1-Aminoanthracen und 5 g (67,6 mmol) 2-Butanol anstelle von 1 g Toluol eingesetzt werden.
Es werden 69,1 g (98,7 % d.Th.) eines orangefarbenen, klaren Öles mit einer Viskosität von 321 $mm^2/s$ bei 25°C erhalten.
Das Öl zeigt eine starke Fluoreszenz im UV-Bereich von 410 - 550 nm (Fluor 2).

Beispiel 4:

Die Arbeitsweise von Beispiel 1 wird wiederholt mit der Abänderung, daß 70 mg (0,32 mmol) 4-Aminopyren anstelle von 35 mg 1-Aminoanthracen und 2 g anstelle von 1 g Toluol eingesetzt werden.
Es werden 67,3 g (96,1 % d.Th.) eines bräunlichen Öles mit einer Viskosität von 298 $mm^2/s$ bei 25°C erhalten. Das Öl zeigt eine starke Fluoreszenz im UV-Bereich von 310 - 425 nm.

Beispiel 5:

35 mg (0,18 mmol) 1-Aminoanthracen werden in 1 g (10,9 mmol) Toluol bei Raumtemperatur gelöst und werden dann versetzt mit 70 g (146 mmol C=C) eines Dimethylpolysiloxans der mittleren Kettenlänge 15 mit endständigen Si-gebundenen Diacrylatgruppen der Formel analog Beispiel 1, das ein Doppelbindungsequivalent von ca. 500 g/mol und eine Viskosität von 110 $mm^2/s$ bei 25°C besitzt. Die Reaktionslösung wird auf 90°C temperiert und eine Stunde lang gerührt. Nach der Filtration wird die Reaktionsmischung im Hochvakuum (1 mbar) bei 90°C bis zur Gewichtskonstanz eingeengt. Es werden 68,4 g (97,7 % d.Th.) eines braunen, klaren Öles mit einer Viskosität von 165 $mm^2/s$ bei 25°C erhalten. Das Öl zeigt eine starke Fluoreszenz im UV-Bereich von 310 - 425 nm (Fluor 3).

Beispiel 6:

Polymer Fluor 1, dessen Herstellung in Beispiel 1 beschrieben ist, wird mit 3 Gew.-% 2-Hydroxy-2-methyl-1-phenylpropan-1-on (Darocur® 1173 der Fa. Ciba-Geigy) versetzt. Die Formulierung wird mit einem Glasstab in einer Schichtdicke von ca. 3 µm auf eine Polypropylenfolie der Fa. UCB, die Corona-vorbehandelt wurde, aufgebracht und in einer Stickstoffatmosphäre mit 20 ppm Restsauerstoff unter einer Hg-Lampe der 300er-Serie der Fa. Fusion drei Sekunden bei 30°C gehärtet. Es wird eine schmierfreie und abriebfeste Siliconbeschichtung erhalten.

Wird die siliconisierte PP-Folie nach der Härtung unter einer UV-Handlampe "Fluotest" der Fa. Hanau mit einem Emissionsmaximum bei 254 nm betrachtet, sind - bedingt durch die mit bloßem Auge gut erkennbare Fluoreszenz der Siliconschicht - kleinste Beschichtungsfehler oder Schichtdickenunterschiede detektierbar.

Beispiel 7:

Polymer Fluor 2, dessen Herstellung in Beispiel 3 beschrieben ist, wird - wie in Beispiel 6 beschrieben - formuliert und gehärtet. Es wird eine schmierfreie und abriebfeste Siliconbeschichtung erhalten.
Wird die siliconisierte PP-Folie nach der Härtung unter einer UV-Handlampe "Fluotest" der Fa. Hanau mit einem Emissionsmaximum bei 366 nm betrachtet, zeigt sich auch hier eine optimale gut wahrnehmbare Fluoreszenz, die eine Beschichtungskontrolle gewährleistet.

Beispiel 8:

Polymer Fluor 3, dessen Herstellung in Beispiel 5 beschreiben ist, wird mit 3 Gew.-% Oligo [2-Hydroxy-2-methyl-1-(4(1-methylvinyl)phenyl)propanon], käuflich erwerblich unter dem Handelsnamen Esacure KIP 150 der Fa. Lamberti, versetzt. Die Formulierung wird mit einem Glasstab in einer Schichtdicke von ca. 3 µm auf eine Polyesterfolie der Fa. ICI aufgebracht und, wie in Beispiel 6 beschrieben, ausgehärtet. Es wird eine schmierfreie und abriebfeste Siliconbeschichtung erhalten.
Wird die siliconisierte Polyesterfolie unter einer UV-Handlampe mit einem Emissionsmaximum bei 254 nm analog Beispiel 6 betrachtet, ist eine starke Fluoreszenz der Siliconschicht gut erkennbar.

**Patentansprüche**

**1.** Fluoreszierende Gruppen aufweisende Organosiliciumverbindungen mit Einheiten der Formel

$$A_dE_aR_bSiX_cO_{\frac{4-(a+b+c+d)}{2}} \qquad (I),$$

wobei

R gleich oder verschieden ist, einen einwertigen, gegebenenfalls substituierten Kohlenwasserstoffrest mit 1 bis 18 Kohlenstoffatom(en) je Rest, der durch ein oder mehrere Sauerstoffatom(e) unterbrochen sein kann, bedeutet,
X gleich oder verschieden ist, ein Chloratom oder ein Rest der Formel $OR^1$ ist, wobei $R^1$ ein Wasserstoffatom oder einen Alkylrest mit 1 bis 8 Kohlenstoffatom(en) je Rest, der durch ein Ethersauerstoffatom substituiert sein kann,
E einen ein oder mehrere (Meth)acrylatgruppen oder (Meth)acrylamidgruppen aufweisenden organischen Rest bedeutet,
A ein Rest der Formel

$$-R^2[-NR^3-L]_x \text{ oder } -R^2[-S-L]_x \qquad (II)$$

ist, wobei $R^2$ einen zwei- oder dreiwertigen, gegebenenfalls substituierten Kohlenwasserstoffrest mit 2 bis 50 Kohlenstoffatomen je Rest bedeutet, der durch eine oder mehrere Gruppen der Formeln

$$-\overset{\displaystyle O}{\overset{\|}{C}}-O- \; , \; -\overset{\displaystyle O}{\overset{\|}{C}}-NR^3- , \; -O-$$

substituiert ist,
x entsprechend der Wertigkeit von Rest $R^2$ 1 oder 2, bevorzugt 2 ist,

$R^3$ die Bedeutung von $R^1$ hat oder einen Rest der Formel -C(=O)-$R^1$ bedeutet und
L einen fluoreszierenden, organischen Rest bedeutet,
a 0, 1 oder 2,
b 0, 1, 2 oder 3,
c 0, 1, 2 oder 3,
d 0, 1 oder 2

und die Summe $a+b+c+d \leq 4$ ist,
mit der Maßgabe, daß je Molekül mindestens ein Rest A enthalten ist.

**2.** Organosiliciumverbindungen nach Anspruch 1, dadurch gekennzeichnet, daß

E ein Rest der Formel

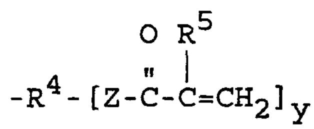
(V),

ist, wobei $R^4$ ein zwei- oder dreiwertiger Kohlenwasserstoffrest mit 1 bis 50 Kohlenstoffatom(en) bedeutet, der durch ein oder mehrere Sauerstoffatome unterbrochen sein kann,
Z ein Rest der Formel -O- oder -$NR^3$- bedeutet, wobei $R^3$ die im Anspruch 1 dafür angegebene Bedeutung hat,
$R^5$ ein Wasserstoffatom oder eine Methylgruppe ist und
y 1 oder 2 ist.

**3.** Organosiliciumverbindungen nach Anspruch 1 oder 2, dadurch gekennzeichnet, daß
$R^2$ ein Rest der Formel

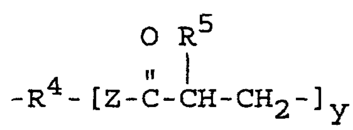
(VI),

ist, wobei $R^4$, $R^5$, Z und y die in Anspruch 2 dafür angegebene Bedeutung haben.

**4.** Verfahren zur Herstellung von Organosiliciumverbindungen mit fluoreszierenden Gruppen, dadurch gekennzeichnet, daß Organosiliciumverbindungen (1) mit Einheiten der Formel

$$E_aR_bSiX_cO_{\frac{4-(a+b+c)}{2}} \quad \text{(III)},$$

wobei R, X, E, a, b und c die in Anspruch 1 dafür angegebene Bedeutung haben,
mit der Maßgabe, daß pro Molekül mindestens ein Rest E enthalten ist,
mit fluoreszierenden, organischen Verbindungen (2) der Formeln

$$HNR^3\text{-L oder HS-L} \quad \text{(IV)},$$

wobei $R^3$ und L die in Anspruch 1 dafür angegebene Bedeutung haben, umgesetzt werden.

**5.** Verfahren nach Anspruch 4, dadurch gekennzeichnet, daß als Organosiliciumverbindung (1) solche der allgemeinen Formel

$$E_gR_{3-g}SiO(SiR_2O)_o(SiREO)_mSiR_{3-g}E_g \quad (VIII),$$

wobei

R und E die im Anspruch 1 dafür angegebene Bedeutung haben,
g 0, 1 oder 2,
m 0 oder eine ganze Zahl im Wert von 1 bis 1 000 und
o 0 oder eine ganze Zahl im Wert von 1 bis 1 000 ist, eingesetzt werden,

mit der Maßgabe, daß je Molekül mindestens ein Rest E enthalten ist.

**6.** Strahlungshärtende Zusammensetzungen enthaltend

(A) fluoreszierende Gruppen und (Meth)acrylatgzuppen aufweisende Organosiliciumverbindungen gemäß Anspruch 1, 2 oder 3 oder hergestellt nach Anspruch 4 oder 5
(B) Photosensibilisatoren

**7.** Formkörper hergestellt durch Vernetzung der Zusammensetzungen gemäß Anspruch 6.

**8.** Formkörper gemäß Anspruch 7, dadurch gekennzeichnet, daß es sich um Beschichtungen handelt.

**9.** Verfahren zur Herstellung von Beschichtungen, dadurch gekennzeichnet, daß die Zusammensetzungen gemäß Anspruch 6 auf das Substrat aufgetragen und durch Bestrahlung mit energiereicher Strahlung vernetzen gelassen wird.

## Claims

**1.** Organosilicon compounds having fluorescent groups, containing units of the formula

$$A_dE_aR_bSiX_cO_{\frac{4-(a+b+c+d)}{2}} \quad (I),$$

where

R is identical or different, a monovalent, optionally substituted hydrocarbon radical having from 1 to 18 carbon atom(s) per radical, which may be interrupted by one or more oxygen atom(s),
X is identical or different, a chlorine atom or a radical of the formula $OR^1$, where $R^1$ is a hydrogen atom or an alkyl radical having from 1 to 8 carbon atom(s) per radical, which may be substituted by an ether oxygen atom,
E is an organic radical having one or more (meth)acrylate groups or (meth)acrylamide groups,
A is a radical of the formula

$$-R^2[-NR^3-L]_x \text{ or } -R^2[-S-L]_x \quad (II),$$

where $R^2$ is a divalent or trivalent, optionally substituted hydrocarbon radical having from 2 to 50 carbon atoms per radical, which is substituted by one or more groups of the formulae

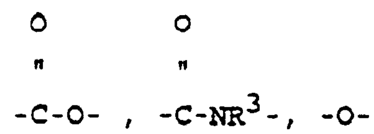

x is 1 or 2, depending on the valency of the radical $R^2$, preferably 2,

$R^3$ is as defined for $R^1$ or is a radical of the formula -C(=O)-$R^1$, and
L is a fluorescent, organic radical,
a is 0, 1 or 2,
b is 0, 1, 2 or 3,
c is 0, 1, 2 or 3,
d is 0, 1 or 2

and the sum a+b+c+d≤4,
with the proviso that at least one radical A is present per molecule.

**2.** Organosilicon compounds according to Claim 1, characterized in that

E is a radical of the formula

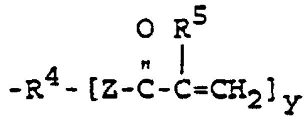 (V),

where $R^4$ is a divalent or trivalent hydrocarbon radical having from 1 to 50 carbon atom(s), which may be interrupted by one or more oxygen atoms,
Z is a radical of the formula -O- or -$NR^3$-, where $R^3$ is as defined in Claim 1,
$R^5$ is a hydrogen atom or a methyl group, and
y is 1 or 2.

**3.** Organosilicon compounds according to Claim 1 or 2, characterized in that
$R^2$ is a radical of the formula

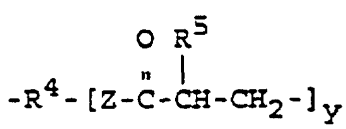 (VI),

where $R^4$, $R^5$, Z and y are as defined in Claim 2.

**4.** Process for the preparation of organosilicon compounds having fluorescent groups, characterized in that organosilicon compounds (1) containing units of the formula

$$E_aR_bSiX_cO_{\frac{4-(a+b+c)}{2}} \quad (III),$$

where R, X, E, a, b and c are as defined in Claim 1, with the proviso that at least one radical E is present per molecule, are reacted with fluorescent, organic compounds (2) of the formulae

$$HNR^3\text{-}L \text{ or } HS\text{-}L \quad (IV),$$

where $R^3$ and L are as defined in Claim 1.

**5.** Process according to Claim 4, characterized in that the organosilicon compound (1) used is one of the general formula

$$E_gR_{3-g}SiO(SiR_2O)_o(SiREO)_mSiR_{3-g}E_g \qquad (VIII),$$

where

R and E are as defined in Claim 1,
g is 0, 1 or 2,
m is 0 or an integer from 1 to 1000 and
o is 0 or an integer from 1 to 1000,

with the proviso that at least one radical E is present per molecule.

**6.** Radiation-curing compositions comprising

(A) organosilicon compounds having fluorescent groups and (meth)acrylate groups according to Claim 1, 2 or 3 or prepared according to Claim 4 or 5, and
(B) photosensitizers.

**7.** Mouldings prepared by crosslinking the compositions according to Claim 6.

**8.** Mouldings according to Claim 7, characterized in that they are coatings.

**9.** Process for the preparation of coatings, characterized in that the compositions according to Claim 6 are deposited onto the substrate and crosslinked by irradiating with high-energy radiation.

**Revendications**

**1.** Composés organosiliciés renfermant des groupes fluorescents avec des motifs de formule

$$A_dE_aR_bSiX_cO_{\frac{4-(a+b+c+d)}{2}} \qquad (I),$$

dans laquelle

R est identique ou différent et représente un radical hydrocarboné monovalent éventuellement substitué ayant de 1 à 18 atome(s) de carbone par radical, qui peut être interrompu par un ou plusieurs atome(s) d'oxygène,
W est identique ou différent et représente un atome de chlore ou un radical de formule $OR^1$, où $R^1$ représente un atome d'hydrogène ou un radical alkyle ayant de 1 à 8 atome (s) de carbone par radical, qui peut être substitué par un atome d'oxygène d'éther,
E représente un radical organique renfermant un ou plusieurs groupes (méth)acrylate ou (méth)acrylamide,
A représente un radical de formule

$$-R^2[-NR^3-L]_x \text{ ou } -R^2[-S-L]_x \qquad (II)$$

dans laquelle $R^2$ représente un radical hydrocarboné bivalent ou trivalent éventuellement substitué ayant de 2 à 50 atomes de carbone par radical, qui est substitué par un ou plusieurs groupes de formules

$$-\overset{\overset{O}{\|}}{C}-O-, \quad -\overset{\overset{O}{\|}}{C}-NR^3-, \quad -O-$$

x vaut 1 ou 2, en fonction de la valence du radical $R^2$, de préférence 2,

$R^3$ a la signification de $R^1$ ou représente un radical de formule $-C(=O)-R^1$ et
L représente un radical organique fluorescent,
a vaut 0, 1 ou 2,
b vaut 0, 1, 2 ou 3,
c vaut 0, 1, 2 ou 3,
d vaut 0, 1 ou 2

et la somme $a+b+c+d \leq 4$,
à condition qu'au moins un radical A soit présent par molécule.

2. Composés organosiliciés selon la revendication 1, caractérisés en ce que

E représente un radical de formule

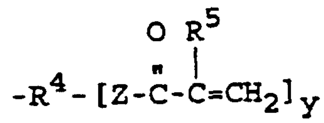

(V),

dans laquelle $R^4$ représente un radical hydrocarboné bivalent ou trivalent ayant de 1 à 50 atome(s) de carbone, qui peut être interrompu par un ou plusieurs atome(s) d'oxygène
Z représente un radical de formule -O- ou $-NR^3-$, où $R^3$ a la signification indiquée à cet effet dans la revendication 1,
$R^5$ représente un atome d'hydrogène ou un groupe méthyle et
y vaut 1 ou 2.

3. Composés organosiliciés selon la revendication 1 ou 2, caractérisés en ce que
$R^2$ représente un radical de formule

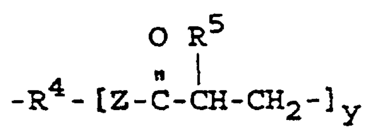

(VI),

dans laquelle $R^4$, $R^5$, Z et y ont la signification indiquée à cet effet dans la revendication 2.

4. Procédé de préparation de composés organosiliciés ayant des groupes fluorescents, caractérisé en ce que l'on fait réagir des composés organosiliciés (1) ayant des motifs de formule

$$E_aR_bSiX_cO_{\frac{4-(a+b+c)}{2}} \quad \text{(III)},$$

dans laquelle R, X, E, a, b et c ont la signification indiquée à cet effet dans la revendication 1,
à condition qu'au moins un radical E soit présent par molécule,
avec des composés organiques fluorescents (2) de formules

$$HNR^3\text{-L ou HS-L} \quad \text{(IV)},$$

dans lesquelles $R^3$ et L ont la signification indiquée à cet effet dans la revendication 1.

5. Procédé selon la revendication 4, caractérisé en ce que l'on utilise, en tant que composé organosilicié (1) ceux de formule générale

$$E_gR_{3-g}SiO(SiR_2O)_o(SiREO)_mSiR_{3-g}E_g \quad (VIII),$$

dans laquelle

R et E ont la signification indiquée à cet effet dans la revendication 1,
g vaut 0, 1 ou 2
m vaut 0 ou est un entier valant de 1 à 1 000 et
o vaut 0 ou est un entier valant de 1 à 1 000,

à condition qu'au moins un radical E soit présent par molécule.

**6.** Compositions durcissant par rayonnement comprenant

(A) des composés organosiliciés renfermant des groupes fluorescents et des groupes (méth)acrylate selon la revendication 1, 2 ou 3 ou préparés selon la revendication 4 ou 5,
(B) des photosensibilisateurs.

**7.** Pièces moulées produites par réticulation des compositions selon la revendication 6.

**8.** Pièces moulées selon la revendication 7, caractérisées en ce qu'il s'agit de revêtements.

**9.** Procédé de production de revêtements, caractérisé en ce que les compositions selon la revendication 6 sont appliquées sur le substrat et on laisse réticuler par irradiation avec un rayonnement à haute énergie.